# EUROPEAN PATENT APPLICATION

(11) **EP 4 464 544 A1**
(43) Date of publication of application: **20.11.2024**
(21) Application number: 24174036.4
(22) Date of filing: 03.05.2024
(51) Int. Cl.: B60L 53/62, B60L 53/66, B60L 53/68, B60L 53/67

(54) **AIRCRAFT CHARGING MONITORING**

(30) Priority: 11.05.2023 US 202363501597 P; 29.04.2024 US 202418649761
(71) Applicant: Pipistrel D.O.O., 5270 Ajdovscina (SI)
(72) Inventor: Gaspari, Fabrizio, 5270 Ajdovscina (SI)
(74) Representative: Glück Kritzenberger Patentanwälte PartGmbB

(57) **Abstract**

A system and method for aircraft charging monitoring which allows aircraft to be monitored and charged while unattended, not requiring a person to monitor a charging process. A control system is presented which may continuously monitor and survey an aircraft charging process with one or many charging stations such that human supervision is not required in a surveyed area. The surveyed area is established within the range of sensors which sense different environmental parameters such as air quality, infrared, and motion. The control system is configured to alert a monitoring environment and a responding entity if a sensor detects an abnormality.

## Description

### BACKGROUND OF THE DISCLOSURE

### 1. Field

The disclosed embodiments relate generally to the field of electric aircraft charging surveillance. More specifically, the disclosed embodiments relate to automated monitoring of electric aircraft while in a charging state.

### 2. Description of the Related Art

Electric aircraft represent a segment of the aerospace industry that focuses on the use of electricity to power aircraft propulsion systems instead of conventional hydrocarbon fuels. Electric propulsion in aircraft can be achieved through various means, including battery-electric, hybrid-electric, and hydrogen fuel cell technologies. For instance, battery-electric aircraft rely on batteries as a source of energy to power electric motors. These batteries store electrical energy and convert it into mechanical energy through electric motors to propel the aircraft.

Similar to electric cars, battery-electric aircraft can be charged using ground-based charging stations at airports. These stations can range from slow to fast charging capabilities, depending on the infrastructure and the aircraft's battery technology. Additionally, these stations should adhere to safety regulations, including electrical safety standards, fire safety regulations, operational guidelines, environmental regulations, certification and inspection, and the like.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subj ect matter. Other aspects and advantages will be apparent from the following detailed description of the embodiments and the accompanying drawing figures.

In some embodiments, the techniques described herein relate to a method for providing automated monitoring of aircraft charging, the method including: detecting a charging status of a charging station indicating initiation of a charging process of an electric aircraft; receiving data associated with the charging process including sensor data from sensors proximate to the charging station; determining the data includes an abnormality associated with the charging process; determining a corrective action based, at least, on the abnormality, wherein the corrective action mitigates the abnormality; and implementing the corrective action on at least the charging station.

In some embodiments, the techniques described herein relate to a method, wherein implementing the corrective action includes providing a notice to an emergency notification system that provides notice to emergency personnel.

In some embodiments, the techniques described herein relate to a method, wherein implementing the corrective action includes providing a notice to a monitoring room.

In some embodiments, the techniques described herein relate to a method, further including: receiving, from the monitoring room, a modified corrective action altering the corrective action; and implementing the modified corrective action on at least the charging station.

In some embodiments, the techniques described herein relate to a method, wherein the abnormality indicates an unauthorized individual is within a surveyed and restricted area in which the charging station is located.

In some embodiments, the techniques described herein relate to a method, wherein the corrective action instructs the charging station to interrupt the charging process of the electric aircraft.

In some embodiments, the techniques described herein relate to a method, wherein receiving the data associated with the charging process includes additional data collected by the charging station.

In some embodiments, the techniques described herein relate to a method, wherein the additional data includes information received from a battery management system associated with the electric aircraft.

In some embodiments, the techniques described herein relate to a method, wherein the sensor data includes readings from an atmospheric sensor.

In some embodiments, the techniques described herein relate to a method, wherein the sensor data includes readings from a radiation sensor.

In some embodiments, the techniques described herein relate to a method, wherein the data includes information gathered from a camera located proximate to the charging station.

In some embodiments, the techniques described herein relate to a system for having automated monitoring of aircraft charging, the system including: a monitoring component configured to collect sensor data from sensors positioned in and around an area; a charging station communicatively coupled to the monitoring component and located within the area, wherein the charging station is configured to couple with an electric aircraft and perform a charging process; and a controller communicatively coupled with the monitoring component and the charging station, wherein the controller is configured to receive the sensor data and data from the charging station and determine an abnormality from the sensor data and data from the charging station.

In some embodiments, the techniques described herein relate to a system, wherein the controller is further configured to determine a corrective action based on the abnormality and implement the corrective action on at least the charging station.

In some embodiments, the techniques described herein relate to a system, further including a monitoring room configured to receive the sensor data, the data from the charging station, and the corrective action, wherein the monitoring room is further configured to monitor the charging process based on the sensor data, the data from the charging station, and the corrective action.

In some embodiments, the techniques described herein relate to a system, wherein the monitoring room is further configured to modify the corrective action.

### BRIEF DESCRIPTION OF SEVERAL VIEWS OF THE DRAWINGS

Illustrative embodiments are described in detail below with reference to the attached drawing figures, which are incorporated by reference herein and wherein:
Figure 1 illustrates a diagram of an automated monitoring environment of battery-electric aircraft.
Figure 2 illustrates a use case sequence diagram of battery-electric aircraft charging in an automated monitoring environment.
Figure 3 illustrates a flow chart facilitating charge monitoring of a battery-electric aircraft in an automated monitoring environment.
Figure 4 illustrates a block diagram of an exemplary computing device, in accordance with embodiments of the present disclosure.

The drawing figures do not limit the disclosure to the specific embodiments disclosed and described herein. The drawings are not necessarily to scale; emphasis is instead placed upon clearly illustrating the principles of the disclosure.

### DETAILED DESCRIPTION

The following detailed description references the accompanying drawings that illustrate specific embodiments in which the disclosure can be practiced. The embodiments are intended to describe aspects of the disclosure in sufficient detail to enable those skilled in the art to practice the disclosure. Other embodiments can be utilized, and changes can be made without departing from the scope of the disclosure. The following detailed description is, therefore, not to be taken in a limiting sense. The scope of the disclosure is defined only by the appended claims, along with the full scope of equivalents to which such claims are entitled.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, act, etc., described in one embodiment may also be included in other embodiments but is not necessarily included. Thus, the technology can include a variety of combinations and/or integrations of the embodiments described herein.

This disclosure relates generally to the field of electric aircraft charging surveillance and, more specifically, to automated monitoring of electric aircraft while in a charging state. The following description is directed to some particular examples for the purpose of describing innovative aspects of this disclosure. However, a person having ordinary skill in the art will readily recognize that the teachings herein can be applied in a multitude of different ways.

### Overview

Embodiments disclosed herein provide a control system and method for aircraft charging monitoring of an electric aircraft throughout a charging process. Currently, an electric aircraft is prohibited from being charged while unattended without human supervision to monitor a charging process. Guidelines and procedures may require an individual to actively monitor the charging process due to the inherent risks involved with electric charging. This requirement of human monitoring and supervision throughout the duration of a charging process can be inefficient. Charging multiple aircraft simultaneously can be even more inefficient and may increase the number of personnel required to monitor the charging process. Current systems and methods increase the cost of electric aircraft operation and are inconvenient because the charging times of aircraft may vary greatly before each aircraft flight and can often take more time than is practical. Additionally, current charging surveillance and monitoring arrangements for vehicles and the like are disadvantageous for aircraft charging surveillance because aircraft charging may have additional regulations and restrictions regarding allowable charging methods. Embodiments within provide a solution to make charging electric aircraft more convenient, efficient, and affordable.

Various aspects of the disclosure improve existing technologies, as well as others, by providing methods, components, and systems that support automated monitoring of aircraft while being charged. Embodiments of the disclosure include a control system configured to continuously monitor and survey an aircraft charging area with one or more charging stations such that human supervision is not required in the surveyed area. A surveyed area can include an area that is monitored by one or many cameras, and/or various sensors, including sensors configured to detect smoke, heat, movement, and other environmental parameters.

In some implementations, the controller is communicatively connected to the cameras and sensors establishing the surveyed area and is configured to process information and determine if a sensor detection contains an abnormality within the surveyed area. Once detected, the controller can determine a corrective action associated with the abnormality and implement the corrective action. In some embodiments, the corrective action can include an emergency notification that alerts and apprises emergency personnel of the situation should intervention be required.

In some embodiments, the corrective action includes having the controller interrupt the charging process when an interruption to the charging process is prudent or necessary. For example, indications from sensors such as overheating, electrical issues, charger malfunction, vehicle battery management, and the like are instances where it may be advisable to have the controller interrupt the charging process. Overheating during the charging process, for instance, can be the result of issues such as faulty charging equipment, poor electrical connection, vehicle battery condition, or overloading electrical circuits. In order to prevent further damage to the aircraft and/or charging equipment, immediately interrupting the charging process and cutting the power exchange is necessary.

In some implementations, the controller is configured to receive input data (e.g., sensor readings from monitoring equipment and charging states of the charging stations) and output corrective actions that notify humans (e.g., emergency personnel) and interrupt the charging process while providing continuous feedback of the environment within the surveyed area. For instance, a charging station may indicate that an abnormality has occurred while charging an aircraft. Another charging station may still maintain normal operation and continue providing the controller with data associated with the charging process.

As an example, input data fed into the controller may include information relating to the environment within the surveyed area. For instance, the input data could include readings from a device detecting particle matter within the atmosphere, such as smoke or other environmental parameters. Additionally, as another example, other information can be collected from an infrared sensor detecting heat signatures within the environment. Other detection devices, such as motion-sensitive and/or stationary cameras, may also contribute readings that are fed as input data to the controller.

As such, particular aspects of the subject matter described in this disclosure can be implemented to realize one or more of the following potential advantages. The present disclosure aims to allow automated monitoring to alleviate the need for an individual to actively monitor the charging process of an aircraft by implementing mechanisms that monitor the charging progress and provide continuous feedback. By providing continuous feedback, embodiments can analyze the information gathered and implement corrective actions should an abnormality be detected. This allows embodiments to monitor multiple charging stations simultaneously without direct human interaction or observation. As such, being able to charge multiple aircraft without having a mandated person observing the process makes charging electric aircraft more efficient, convenient, and affordable.

### Example Automated Electric Aircraft Charging Environment

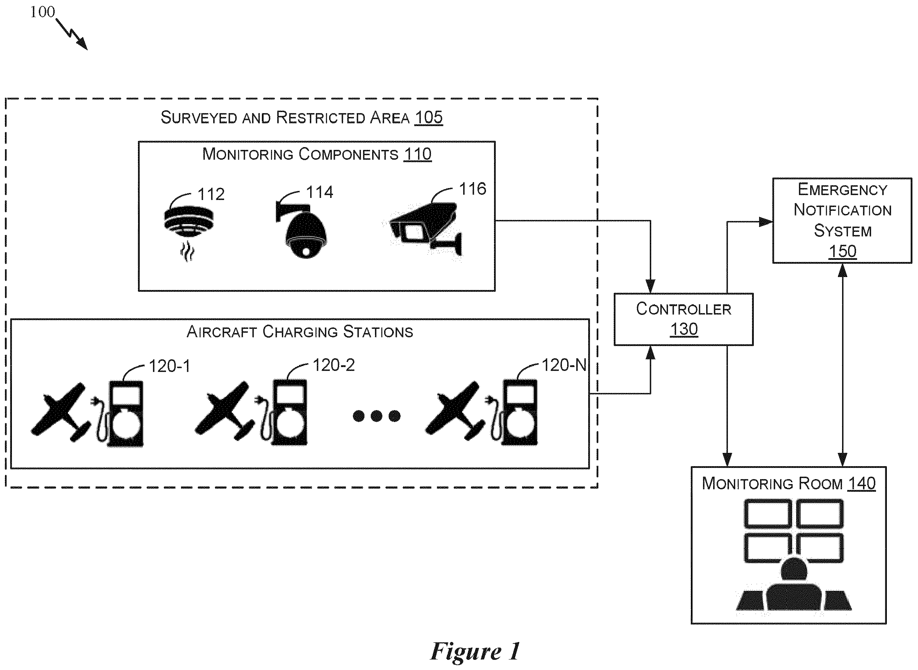

Referring now to FIG. 1, a block diagram of an example automated aircraft charging environment 100, including automated charge monitoring capabilities suitable for use in implementing embodiments of the disclosure, is shown. The automated aircraft charging environment 100 is configured to provide charging stations for battery-electric aircraft within a surveyed and restricted area. Once an aircraft is stationed within the area and connected to a charging area, monitoring components can continuously analyze the charging progress of the aircraft. If an abnormality is detected by a controller, a corrective action can be determined and implemented to resolve the abnormality.

The automated charge monitoring capabilities of the automated aircraft charging environment 100 can be implemented as a standalone system or as part of another system or suite of systems used in the operation and maintenance of an aircraft. For example, the automated charge monitoring capabilities can be implemented as part of a suite of support services, or fueling systems, enabling the automated charge monitoring to be a module of a fuel services system.

The automated aircraft charging environment 100 includes surveyed and restricted area 105, monitoring components 110, aircraft charging station 120-1, 120-2, 120-N (which may be referred to herein singularly as "aircraft charging station 120" or collectively as "aircraft charging stations 120") where N is a variable integer representing any number of aircraft charging stations 120, a controller 130, a monitoring room 140, and an emergency notification system 150. The monitoring components 110 include an atmospheric sensor 112, a radiation sensor 114, and a camera 116.

The surveyed and restricted area 105 is an area of the automated aircraft charging environment 100 and is a restricted area or apron (the area of an airport where aircraft are parked, unloaded or loaded, refueled, or boarded) designed to ensure the safety, security, and integrity of airport operations. The surveyed and restricted area 105 can include controlled access features, surveillance and monitoring, safety measures, secure communication and coordination capabilities, and aircraft security. For instance, the controlled access features can include perimeter fencing, access control points, and security personnel that limit and restrict access to the area. It should be noted that the shape and size of the surveyed area 105 may vary and should not be considered limiting within the scope of the methods and systems proposed in this application.

In some implementations, the surveyed and restricted area 105 is an area within a detection range (i.e., the surveyed area) of environment detection instruments and sensors included and positioned within the automated aircraft charging environment 100. For example, in some embodiments, surveyed and restricted area 105 includes the monitoring components 110, such as the atmospheric sensor 112, the radiation sensor 114, and the camera 116.

The monitoring components 110 are components of the automated aircraft charging environment 100 configured to ensure the safety, efficiency, operations, and security of aircraft being charged at the aircraft charging stations 120. The monitoring components 110 may be strategically placed such that their detection range establishes a desired area, size, and location of the surveyed and restricted area 105. The monitoring components 110 may vary in detection range and count to establish the desired range and size of the surveyed and restricted area 105. In some embodiments, a single sensor is configured to detect various elements such as air quality, infrared, and motion within the surveyed and restricted area 105.

In some embodiments, the monitoring components 110 include an atmospheric sensor 112 configured to monitor the atmospheric environment within the surveyed and restricted area 105. The atmospheric sensor 112 is further configured to detect particle matter, such as soot, and may be able to detect abnormal carbon monoxide levels in the environment within the surveyed and restricted area 105. In addition to particle matter detection, the atmospheric sensor 112 capabilities can also include gas concentration measurements, temperature and humidity measurements, pressure sensing, and wind speed and direction. Gas concentration measurements, for instance, can include the detection and measurement of concentrations of various gases, such as carbon dioxide (CO2), carbon monoxide (CO), sulfur dioxide (SO2), nitrogen oxides (NOx), ozone (03), and volatile organic compounds (VOCs), among others.

In some embodiments, the monitoring components 110 include a radiation sensor 114 configured to detect and measure ionizing radiation such as alpha particles, beta particles, gamma rays, and neutrons. For example, the radiation sensor 114 can be configured as an infrared sensor capable of detecting and measuring infrared radiation, which is a form of electromagnetic radiation with wavelengths longer than visible light but shorter than microwave radiation. Infrared sensors can focus on the non-ionizing infrared portion of the electromagnetic spectrum.

The radiation sensor 114 is further configured with various other capabilities such as temperature measurement, motion detection, gas detection, distance measurement, and spectral analysis. For instance, the radiation sensor 114 can detect a heat signature caused by a flame in the surveyed and restricted area 105.

In some embodiments, the monitoring components 110 can include a camera 116 configured to monitor and record audio and video within the surveyed and restricted area 105. In some implementations, the camera 116 is configured as a motion-detection camera, including motion detection technologies. These technologies include passive infrared sensors, video motion detection, and a combination of both passive infrared sensors and video motion detection. Video motion detection, for instance, involves analyzing the video feed in real time to detect changes in the scene that indicate movement. This can be advantageous as this technology does not rely on heat and can be adjusted to sensitivity, specific areas of interest (e.g., the surveyed and restricted area 105), and ignore certain types of movements to reduce false alarms.

It should be noted that additional sensors capable of detecting other environmental parameters may be included in the monitoring components 110 in addition to the atmospheric sensor 112, the radiation sensor 114, and the camera 116. In some embodiments, various sensor types may be used in addition to or in place of the atmospheric sensor 112, the radiation sensor 114, and the camera 116 disclosed herein, and the specific types of sensors used should not be considered limiting within the scope of this application. These sensors include, but are not limited to, radar sensors, weather sensors, surface movement sensors, thermal imaging sensors, proximity sensors, optical sensors, chemical sensors, noise sensors, vibration sensors, pressure sensors, and the like.

The monitoring components 110 are further configured to communicate with the controller 130 to provide sensor data in real-time or near real-time for analysis. The monitoring components 110 also include additional functionality features such as real-time monitoring, data logging and analysis, various connectivity and integration features, and automatic calibration and maintenance features. For instance, the monitoring components 110 can be communicatively coupled to each other, and the controller 130, via a wired connection or wirelessly via a network such as Wi-Fi, Bluetooth, or cellular connections.

As shown, the surveyed and restricted area 105 is arranged to include a space/area in which aircraft can be charged at the aircraft charging stations 120. The charging stations 120 are configured with features to charge an electric aircraft and are further configured to communicate charging status information to the controller 130, the monitoring room 140, or both. The charging stations 120 also provide multiple battery type support, controlled charging processes, temperature monitoring, voltage and current regulation, and various safety features such as short-circuit protection, over-voltage protection, and spark-proof connections to minimize the risk of accidents during the charging process.

In some embodiments, the charging stations 120 apply automated charging cycles to the battery associated with an aircraft. For instance, the charging station 120 can automatically detect the battery type and condition and apply the appropriate charging profile for that specific battery. This may include stages like bulk charge, absorption charge, and float charge. In addition to establishing a charging cycle, the charging stations 120 can include diagnostic functions that can assess battery health, state of charge, and overall performance. The diagnostic functions can also identify issues such as cell imbalance, reduced capacity, or the need for equalization charging.

During the charging process, the charging stations 120 can provide charging status data via a network connecting to the controller 130. In some implementations, the charging status data can also be directly transmitted to the emergency notification system 150 and the monitoring room 140.

The charging stations 120 are further configured to discontinue or interrupt the charging process to an aircraft. For example, the controller 130 may determine if a sensor reading contains an abnormality while the aircraft is being charged. Additionally, the charging stations 120 are also configured to interrupt the charging process and implement interruption mechanisms governed by the charging station's 120 control system, and can be triggered by specific conditions or parameters being met. These conditions include, but are not limited to, overheating detection, electrical faults, overvoltage or undervoltage, full charge achievement, cell balancing, conditioning cycles, scheduled charging, and emergency stops.

It should be noted that while the aircraft charging stations 120 are shown to be within the surveyed and restricted area 105, in some embodiments, the aircraft charging stations 120 can be outside of the surveyed and restricted area 105.

The controller 130 is a component of the automated aircraft charging environment 100 configured to continuously monitor and analyze data received from the monitoring components 110 and the aircraft charging stations 120 to determine whether an abnormality has occurred during a charging process. An abnormality may include issues such as battery overheating, overvoltage or undervoltage, overcurrent, electrical faults, connectivity issues, leakage currents, environmental conditions (e.g., humidity, precipitation, or extreme temperatures that could affect the charging process or pose safety risks), battery state of health, unauthorized access or tampering, and software malfunctions. In some embodiments, the functionalities of the controller 130 are implementable on a computing device, such as the computing device 400 described below.

The controller 130 is configured to continuously monitor for abnormalities such as those mentioned above, as well as others, by analyzing the data being received. In some embodiments, the controller 130 also determines a corrective action for an abnormality that has been detected. For instance, the monitoring components 110 can detect an individual within the surveyed and restricted area, and a charging station 120 may detect that its equipment is being tampered with. Based on at least that information, the controller 130 can determine that there has been unauthorized access by an individual that is tampering with a charging station 120. From that abnormality, the controller 130 can determine that an interruption to the charging process is required for that charging station 120 and that the emergency notification system 150 be notified. The emergency notification system 150 can then be used to contact and notify the appropriate personnel to handle the abnormality. In this particular example, the emergency notification system 150 can notify security that an unauthorized individual is currently present within the surveyed and restricted area 105.

The corrective actions that can be determined include, but are not limited to, cooling system actions, charging rate adjustments, charging pauses (i.e., temporary charging pause to assist in reducing temperature), voltage regulation, charge interruption, circuit protection activation, fault diagnosis and repair, automatic network reconnection attempts, physical inspection, and maintenance notifications, charge adjustments based on environmental conditions, protective measures against environmental hazards, adaptive charging strategies, battery replacement recommendations, security measures, alert notifications, software update recommendations, and the like.

The monitoring room 140 is a component of the automated aircraft charging environment 100 configured to receive feedback from the monitoring components 110, charging status information from charging stations 120, and information associated with the controller (e.g., abnormalities and corrective actions). In some embodiments, the monitoring room 140 may display this information to an individual or individuals within the room or area. Many different arrangements for the monitoring room 140 may exist, which should not be considered limiting within the scope of this application. In embodiments, based on the information being received, an individual or administrator within the monitoring room 140 can communicate with the emergency notification system 150.

The monitoring room 140 is further configured to override corrective actions determined by the controller 130 and implement a different corrective action based on the knowledge and experience of the administrator. For instance, a corrective action may include reducing the charge rate of a battery, but an administrator within the monitoring room 140 can override that corrective action and completely interrupt the charging process. As another example, the controller 130 may produce a corrective action that transmits an alert to the emergency notification system 150 that there is an unauthorized individual within the surveyed and restricted area 105. An administrator within the monitoring room 140 can observe the individual within the area 105 and determine that they are authorized to be there and can then transmit a notification to the emergency notification system 150 to disregard the alert.

The emergency notification system 150 is a component of the automated aircraft charging environment 100 configured to facilitate emergency response and notification to corresponding personnel or responding entities. The term "responding entity," as used within this application, is used to describe any type of fire or any other sort of first responders that may need to be contacted if there is a hazardous or abnormal situation within the surveyed and restricted area 105. Emergency notification system 150 may connect with a responding entity in numerous ways, and its location may exist either within or outside the surveyed and restricted area 105. In embodiments, the controller 130 and the monitoring room 140 are configured to communicate with the emergency notification system 150 over a network.

As such, real-time status and feedback information can be transferred between the charging stations 120 and the monitoring components 110 to the controller 130, the monitoring room 140, or optionally the emergency notification system 150. Advantageously, the continuous communication between components and analysis allows the automated aircraft charging environment 100 to facilitate the unattended charging of aircraft. The communication coupling between components also allows for environmental parameters (i.e., air quality, heat signatures, movement, etc.) to be collected using the monitoring components 110 that would otherwise require observation from a person in the surveyed and restricted area 105. That person would then be required to manually communicate that information to an appropriate location. However, as the automated aircraft charging environment 100 provides automated monitoring of an environment, physical attendance from a human is not required throughout the charging process.

It is noted that FIG. 1 is intended to depict the major representative components of an automated aircraft charging environment 100. In some embodiments, however, individual components may have greater or lesser complexity than as represented in FIG. 1, components other than or in addition to those shown in FIG. 1 may be present, and the number, type, and configuration of such components may vary.

### Example Use Case Sequence Diagram

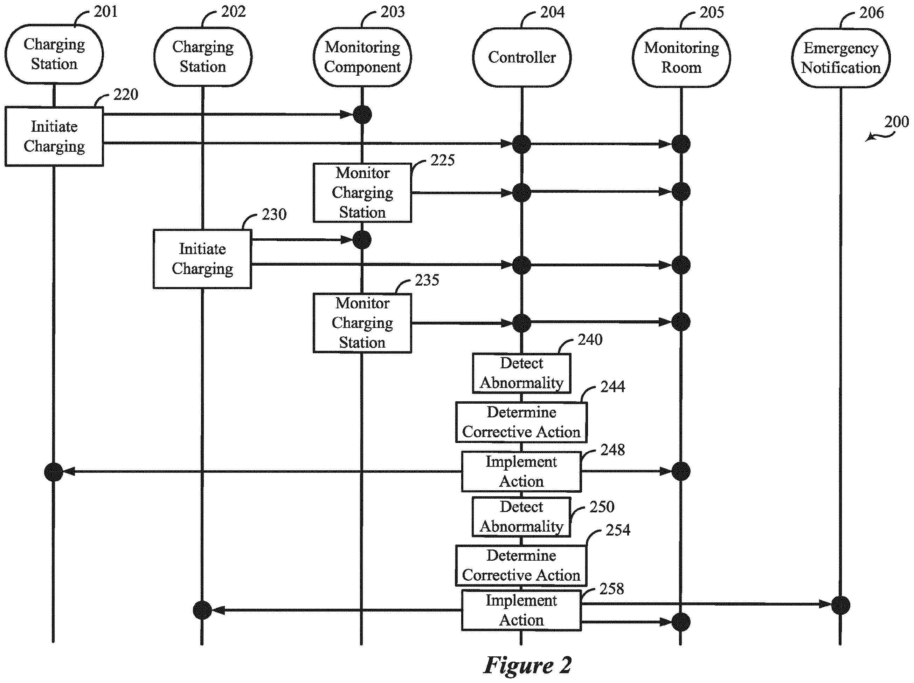

Figure 2 shows a sequence diagram 200 of an example use case scenario of a charging station 201 and another charging station 202 initiating a charging process on an aircraft, respectively, in accordance with embodiments of the present disclosure. According to some aspects, the sequence diagram 200 represents a procedure that can occur to components within an automated aircraft charging environment to allow them to exchange information, determine potential abnormalities, and implement corrective actions. The corrective actions ensure the charging process is performed in a safe and timely manner without the need for direct human monitoring or intervention. Additionally, in some aspects, the sequence diagram 200 illustrates how multiple aircraft can be in a charging process within the automated aircraft charging environment and how separate and distinct abnormalities may be detected that those abnormalities can be associated with a particular charging station. Additionally, the sequence diagram 200 illustrates that separate and distinct corrective actions can be implemented within the automated aircraft charging environment that separately affects the individual charging stations (201, 202).

As shown, the sequence diagram 200 includes a charging station 201 and a charging station 202 initiating a charging process and communication with several components of an automated aircraft charging environment. These components include a monitoring component 203, a controller 204, a monitoring room 205, and an emergency notification system 206. While only 2 charging stations (201, 202) are shown in Figure 2, implementations of the present disclosure can include any number of charging stations capable of facilitating a charging process and allowing that process to be monitored.

In some examples, at block 220, the charging station 201 initiates charging of a battery associated with an electric aircraft. The charging station 201 can initiate the charging process when a physical connection is made between the charging station and the aircraft using a compatible connector. Once the physical connection is made, the charging station 201 and the aircraft can communicate using specific protocols. This communication can contain information including battery specifications, its state of charge (SoC), and how much power the battery can safely receive. These protocols can vary, but some commonly used protocols include ISO 15118 and CHAdeMO.

In some implementations, the charging station 201 can receive battery information from the aircraft's Battery Management System (BMS). This battery information can include the battery's condition, including its SoC, temperature, voltage, and health. Based on that information, the charging station 201 can automatically adjust the charging and transmit that information to the monitoring component 203, the controller 204, and the monitoring room 205.

At block 225, the monitoring component 203 can begin to monitor the charging station 201. As discussed, the monitoring component 203 can implement various sensors that can monitor the condition of the aircraft, the charging station, and the proximate environment around the charging area. These sensors can include different types of atmospheric sensors, radiation sensors, and cameras. The information collected by the monitoring component 203 can continuously be provided to the controller 204 and the monitoring room 205.

Similarly, at block 230 the charging station 202 initiates charging of a battery associated with another electric aircraft. The charging station 202 can initiate the charging process when a physical connection is made between the charging station and the aircraft using a compatible connector. Based on the initiation, the charging station 202 can transmit information to the monitoring component 203, the controller 204, and the monitoring room 205, indicating that the charging process has started.

In a similar fashion as block 225, at block 235, the monitoring component 203 can begin to monitor the charging station 201. As discussed, the monitoring component 203 can implement various sensors that can monitor the condition of the aircraft, the charging station, and the proximate environment around the charging area. The information collected by the monitoring component 203 can continuously be provided to the controller 204 and the monitoring room 205.

As an example, at block 240, the controller 204 detects an abnormality associated with the charging station 201. The abnormality can be based on the information received from either the charging station 201, the monitoring component 203, or both. When the controller 204 receives information from these components, it can continuously analyze that information to detect whether an abnormality is present. As discussed, an abnormality may include issues such as battery overheating, overvoltage or undervoltage, overcurrent, electrical faults, connectivity issues, leakage currents, environmental conditions (e.g., humidity, precipitation, or extreme temperatures that could affect the charging process or pose safety risks), battery state of health, unauthorized access or tampering, and software malfunctions.

In some implementations, an abnormality can be a series of events or conditions that either simultaneously occur or occur in succession. For example, an unauthorized access detection and a charging station disconnect may be categorized as a particular abnormality. This allows the controller to determine a corrective action that alleviates a collection of issues rather than providing a corrective action on each individual issue separately, as some issues may be related.

At block 244, the controller 204 determines a corrective action. The corrective action can be based on the abnormality detected. As an example, in this particular use case scenario, the abnormality detected at block 240 can be that the battery of the aircraft at charging station 201 is overheating. Based on that abnormality, the controller 204 can then determine what corrective action to take to mitigate the overheating battery. As an overheating battery can result from a multitude of issues, the controller 204 can analyze the data being received from that charging process to determine the best course of action. In this particular use case example, the controller 204 determines that the corrective action is to pause the charging process to give the battery an opportunity to lower its temperature down to a safe temperature range.

At block 248, the controller 204 can automatically implement the corrective action. The controller 204 can transmit instructions to the charging station 201 to pause the charging process. The instructions can also indicate when the charging process can resume. For instance, the instructions can dictate that the charging process should be paused for thirty minutes. In another instance, the instructions can dictate that the charging process should be paused until the battery's temperature is within a certain temperature range. In addition to sending the instructions to the charging station 201, the controller 204 can transmit notice to the monitoring room 205 of the corrective action.

In some embodiments, the monitoring room 205 can provide an override of the corrective action by either transmitting a different corrective action or a modified corrective action. For instance, in this use case, an administrator within the monitoring room 205 can analyze the data and the corrective action and decide that the corrective action should be to implement a cooling mechanism and allow the charging process to continue. As another example, the administrator may modify the corrective action such that the instructions vary on when the charging process can resume.

At block 250, the controller 204 detects an abnormality associated with the charging station 202. The abnormality can be based on the information received from either the charging station 202, the monitoring component 203, or both. When the controller 204 receives information from these components, it can continuously analyze that information to detect whether an abnormality is present.

At block 254, the controller 204 determines a corrective action. The corrective action can be based on the abnormality detected associated with the charging process being performed by charging station 202. As an example, in this particular use case scenario, the abnormality detected at block 240 can be that a fire has started at or nearby the charging station 202. Based on that abnormality, the controller 204 can then determine what corrective action to take to mitigate the fire. The controller 204 can analyze the data being received and potentially determine the type of fire and where the fire is located exactly or approximately.

At block 258, the controller 204 can implement the corrective action. In this example, the controller 204 transmits information to the emergency notification system 206 that can include the type of emergency (e.g., a fire) as well as pertinent information such as the type of fire (e.g., ordinary combustible, combustible liquid, electrical, combustible metal, chemical, etc.) and the location of the fire. Additionally, the corrective action can transmit a command to the charging station 202 to interrupt the charging process due to the fire. The controller can also send a notice to the monitoring room 205 alerting an administrator of the situation.

As such, the controller 204 can facilitate the automated monitoring of multiple charging processes of electric aircraft at a charging station. In this example, the controller 204 facilitated the monitoring of two separate charging processes and resolved two distinct abnormalities without human intervention or interaction required.

### Example Flow Diagram

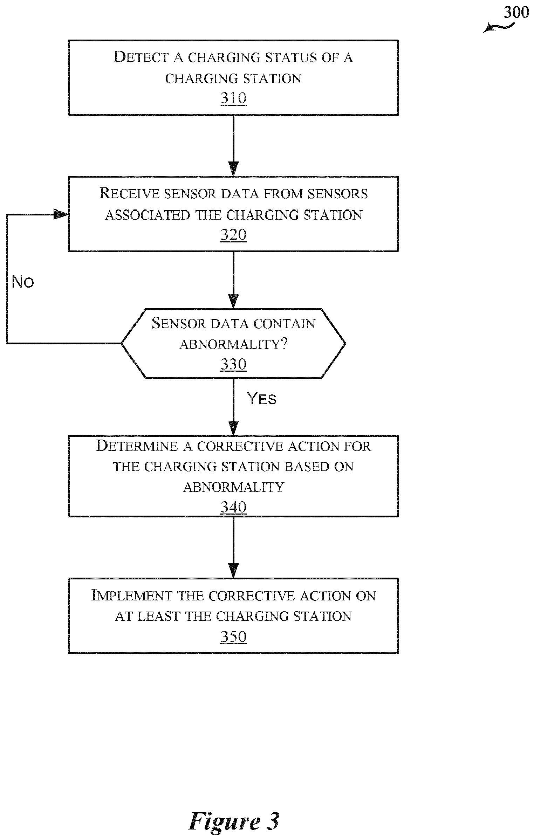

With reference now to Figure 3, a flow diagram is provided illustrating a method. Each block of the method 300 and any other methods described herein comprise a computing process performed using any combination of hardware, firmware, and/or software. For instance, in some embodiments, various functions are carried out by a processor executing instructions stored in memory. In some cases, the methods are embodied as computer-usable instructions stored on computer storage media.

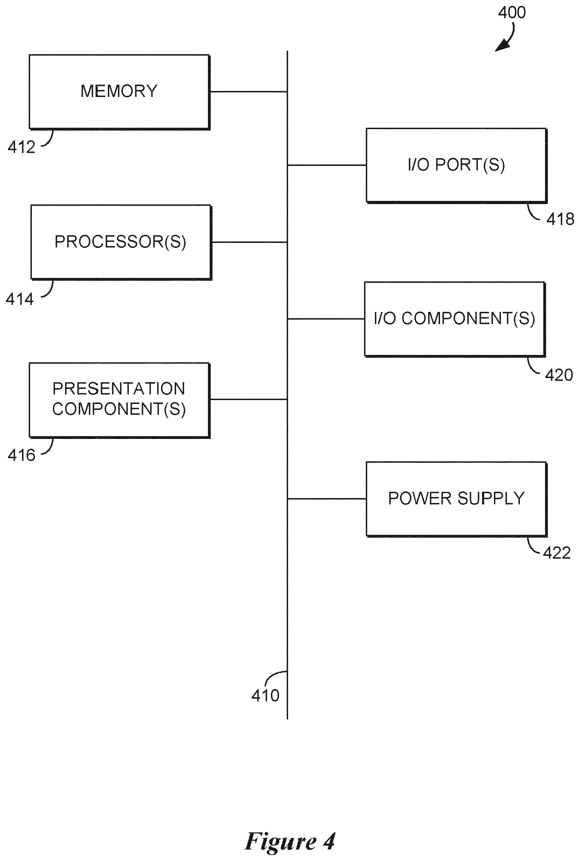

Figure 3 illustrates a method 300 of a series of acts in a method of automated monitoring of electric aircraft while in a charging state, in accordance with embodiments of the present disclosure. In one or more embodiments, the method 300 is performed in an environment that includes the automated aircraft charging environment 100. In some examples, the method 300 may be performed by a computing device such as the one of the computing device 400, described with reference to Figure 4. The method 300 is intended to be illustrative of one or more methods in accordance with the present disclosure and is not intended to limit potential embodiments. Alternative embodiments can include additional, fewer, or different steps than those articulated in Figure 3.

As illustrated in Figure 3, the method 300 includes a block 310, which detects that a charging status has changed to a charging station, indicating that a charging process has been initiated between the charging station and an electric aircraft. As described, the charging station can include various charging ports for connecting or plugging into aircraft. These charging ports allow the charging station to recharge an aircraft's batteries as well as to communicatively couple the aircraft to the charging station. If no aircraft has been connected, the charging station and a controller can continuously monitor for aircraft being connected for charging. However, if an aircraft has been connected, the method 300 proceeds to block 320.

At block 320, a controller receives data relating to the charging process from a monitoring component associated with the automated aircraft charging environment. As described, the monitoring component can include various sensors, such as an atmospheric sensor, a radiation sensor, and a camera. The monitor component can be located and positioned in proximity to a surveyed and restricted area where the charging station is located. The positioning of the monitoring component allows it to gather data (e.g., sensor data) relating to the charging station, aircraft, and the surrounding area. As data is gathered, the controller can continuously receive that information from the monitoring component during the charging process.

In some embodiments, the controller also receives data from the charging station, including information the charging station receives from the aircraft's battery management system, such as the battery's condition, including its SoC, temperature, voltage, and health. The data that the charging station can also provide, as an example, is the charging rate, the battery capacity and health, vehicle identification number, charging session details, charging duration, time of use, the status of charging point, environmental conditions, grid demand, error logs and alerts, usage statistics, and the like.

At block 330, the controller analyzes the received data to determine whether the data received indicates there is an abnormality in the charging process. As an example, an abnormality can be detection of heat from a radiation sensor, or detection of particle matter in the air by an atmospheric sensor. Either instance, separately or combined, may indicate that a fire is occurring proximate to the survey and secure area and potentially near the charging station. As another example, the abnormality may indicate there is possibly an unauthorized individual within the surveyed and secure area. In either instance, the monitoring component can detect changes in the environment and/or potential added heat signatures or movement in and around the surveyed area and secure area. In some embodiments, a type of abnormality communicated to the controller can be an indication that the aircraft has been fully charged.

If no abnormalities are detected, the method 300 returns to block 320 and continuously receives data for the controller to analyze during the charging process. However, if an abnormality is detected, the method 300 proceeds to block 340. At block 340, the controller determines a corrective action associated with the abnormality. The corrective action can be an action or actions that can be taken to resolve or alleviate the abnormality. As an example, and as previously discussed, the corrective action can include directly altering the charging state of the charging station by pausing, interrupting, or lowering the charge rate of the charging station if doing so resolves the abnormality.

In some embodiments, the corrective action is a series of actions that can be taken to resolve or alleviate the abnormality. For instance, if the battery that is being charged is overheating, then part of a corrective action can be to interrupt the charging process to prevent the overheating from continuing. Another part of the corrective action can also be to introduce a cooling mechanism that can actively cool the battery back down to a safe range. It should be noted that a battery overheating can be the cause of various issues, that may or may not involve the charging station directly. For instance, extreme weather conditions may be the cause of the overheating. As such, the determination of the corrective action can factor in the causation an abnormality, and not just abnormality in isolation.

At block 350, the controller implements the corrective action. The implementation of the corrective action can include multiple instructions distributed throughout an automated aircraft charging environment. For instance, implementing the corrective action can include transmitting commands to the charging station, transmitting notice to an emergency notification system, as well as transmitting information to a monitoring room for analysis and/or approval.

### Example Operating Environment

Having described an overview of embodiments of the present technology, an example operating environment in which embodiments of the present technology may be implemented is described in order to provide a general context for various aspects of the present technology. Referring now to FIG. 4, in particular, an exemplary operating environment for implementing embodiments of the present technology is shown and designated generally as computing device 400. Computing device 400 is but one example of a suitable computing environment and is not intended to suggest any limitation as to the scope of use or functionality of the technology. Neither should computing device 400 be interpreted as having any dependency or requirement relating to any one or combination of components illustrated.

The technology of the present disclosure may be described in the general context of computer code or machine-useable instructions, including computer-executable instructions such as program modules, being executed by a computer or other machines, such as a personal data assistant or other handheld devices. Generally, program modules, including routines, programs, objects, components, data structures, etc., refer to code that performs particular tasks or implements particular abstract data types. The technology may be practiced in a variety of system configurations, including handheld devices, consumer electronics, general-purpose computers, more specialty computing devices, etc. The technology may also be practiced in distributed computing environments where tasks are performed by remote-processing devices that are linked through a communications network.

With reference to FIG. 4, computing device 400 includes bus 410 that directly or indirectly couples the following devices: memory 412, one or more processors 414, one or more presentation components 416, input/output ports 418, input/output components 420, and illustrative power supply 422. Bus 410 represents what may be one or more buses (such as an address bus, data bus, or combination thereof). Although the various blocks of FIG. 4 are shown with lines for the sake of clarity, in reality, delineating various components is not so clear, and metaphorically, the lines would more accurately be grey and fuzzy. For example, one may consider a presentation component, such as a display device, or an I/O component. Also, processors have memory. We recognize that such is the nature of the art and reiterate that the diagram of FIG. 4 merely illustrates an example computing device that can be used in connection with one or more embodiments of the present technology. A distinction is not made between such categories as "workstation," "server," "laptop," "handheld device," etc., as all are contemplated within the scope of FIG. 4 and reference to "computing device."

Computing device 400 typically includes a variety of computer-readable media. Computer-readable media can be any available media that can be accessed by computing device 400 and includes both volatile and nonvolatile media, removable and non-removable media. By way of example, and not limitation, computer-readable media may comprise computer storage media and communication media.

Computer storage media can include volatile and nonvolatile, removable, and non-removable media implemented in any method or technology for storage of information, such as computer-readable instructions, data structures, program modules, or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 400. Computer storage media excludes signals per se.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media.

Memory 412 includes computer storage media in the form of volatile or nonvolatile memory. The memory may be removable, non-removable, or a combination thereof. Examples of hardware devices include solid-state memory, hard drives, optical-disc drives, etc. Computing device 400 includes one or more processors that read data from various entities, such as memory 412 or I/O components 420. Presentation component(s) 416 presents data indications to a user or other device. Examples of presentation components include a display device, speaker, printing component, vibrating component, etc.

I/O ports 418 allow computing device 400 to be logically coupled to other devices, including I/O components 420, some of which may be built in. Illustrative components include a microphone, joystick, game pad, satellite dish, scanner, printer, wireless device, etc.

Having identified various components in the present disclosure, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions, etc.) can be used in addition to or instead of those shown.

The subject matter of the present disclosure is described with specificity herein to meet statutory requirements. However, the description itself is not intended to limit the scope of this patent. Rather, the inventor has contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described. For purposes of this disclosure, words such as "a" and "an," unless otherwise indicated to the contrary, include the plural as well as the singular. Thus, for example, the requirement of "a feature" is satisfied where one or more features are present.

The present disclosure has been described in relation to particular embodiments, which are intended in all respects to be illustrative rather than restrictive. Alternative embodiments will become apparent to those of ordinary skill in the art to which the present disclosure pertains without departing from its scope.

From the foregoing, it will be seen that this disclosure is one well adapted to attain all the ends and objects set forth above, together with other advantages which are obvious and inherent to the system and method. It will be understood that certain features and subcombinations are of utility and may be employed without reference to other features and subcombinations.

## Claims

1. A method for providing automated monitoring of aircraft charging, the method comprising:
detecting a charging status of a charging station indicating initiation of a charging process of an electric aircraft;
receiving data associated with the charging process including sensor data from sensors proximate to the charging station;
determining the data includes an abnormality associated with the charging process;
determining a corrective action based, at least, on the abnormality, wherein the corrective action mitigates the abnormality; and
implementing the corrective action on at least the charging station.

2. The method of claim 1, wherein implementing the corrective action includes providing a notice to an emergency notification system that provides notice to emergency personnel.

3. The method of claim 1, wherein implementing the corrective action includes providing a notice to a monitoring room.

4. The method of claim 2 or 3, further comprising:
receiving, from the monitoring room, a modified corrective action altering the corrective action; and
implementing the modified corrective action on at least the charging station.

5. The method of any of claims 1 to 4, wherein the abnormality indicates an unauthorized individual is within a surveyed and restricted area in which the charging station is located.

6. The method of any of claims 1 to 5, wherein the corrective action instructs the charging station to interrupt the charging process of the electric aircraft.

7. The method of any of claims 1 to 6, wherein receiving the data associated with the charging process includes additional data collected by the charging station.

8. The method of claim 7, wherein the additional data includes information received from a battery management system associated with the electric aircraft.

9. The method of any of claims 1 to 8, wherein the sensor data includes readings from an atmospheric sensor.

10. The method of any of claims 1 to 9, wherein the sensor data includes readings from a radiation sensor.

11. The method of any of claims 1 to 10, wherein the data includes information gathered from a camera located proximate to the charging station.

12. A system for having automated monitoring of aircraft charging, the system comprising:
a monitoring component configured to collect sensor data from sensors positioned in and around an area;
a charging station communicatively coupled to the monitoring component and located within the area, wherein the charging station is configured to couple with an electric aircraft and perform a charging process; and
a controller communicatively coupled with the monitoring component and the charging station, wherein the controller is configured to receive the sensor data and data from the charging station and determine an abnormality from the sensor data and data from the charging station.

13. The system of claim 12, wherein the controller is further configured to determine a corrective action based on the abnormality and implement the corrective action on at least the charging station.

14. The system of claim 12 or 13, further comprising a monitoring room configured to receive the sensor data, the data from the charging station, and the corrective action, wherein the monitoring room is further configured to monitor the charging process based on the sensor data, the data from the charging station, and the corrective action.

15. The system of claim 14, wherein the monitoring room is further configured to modify the corrective action.
